(19) Europäisches Patentamt
European Patent Office
Office européen des brevets

(11) **EP 3 544 193 B1**

## (12) FASCICULE DE BREVET EUROPEEN

(45) Date de publication et mention
de la délivrance du brevet:
**18.05.2022 Bulletin 2022/20**

(21) Numéro de dépôt: **19164003.6**

(22) Date de dépôt: **20.03.2019**

(51) Classification Internationale des Brevets (IPC):
$H04B\ 1/12^{(2006.01)}$ $H04B\ 7/08^{(2006.01)}$

(52) Classification Coopérative des Brevets (CPC):
**H04B 1/126; H04B 7/086**

(54) **PROCÉDÉ ADAPTATIF ROBUSTE DE SUPPRESSION D'INTERFÉRENCES EN PRÉSENCE DE SIGNAL UTILE**

ROBUSTES ADAPTIVES VERFAHREN ZUR UNTERDRÜCKUNG VON INTERFERENZEN IN GEGENWART EINES NUTZSIGNALS

ROBUST ADAPTIVE METHOD FOR SUPPRESSING INTERFERENCE IN THE PRESENCE OF A USEFUL SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2018 FR 1800239**

(43) Date de publication de la demande:
**25.09.2019 Bulletin 2019/39**

(73) Titulaire: **Thales**
**92400 Courbevoie (FR)**

(72) Inventeur: **BAUDIN, Roland**
**31037 TOULOUSE Cedex 1 (FR)**

(74) Mandataire: **Marks & Clerk France**
**Immeuble "Visium"**
**22, avenue Aristide Briand**
**94117 Arcueil Cedex (FR)**

(56) Documents cités:
- **YASEN WANG ET AL: "Robust mainlobe interference suppression for coherent interference environment", EURASIP JOURNAL ON ADVANCES IN SIGNAL PROCESSING, BIOMED CENTRAL LTD, LONDON, UK, vol. 2016, no. 1, 13 décembre 2016 (2016-12-13), pages 1-7, XP021239980, DOI: 10.1186/S13634-016-0434-Z**
- **LIU JIANGBO ET AL: "Adaptive beamforming algorithms with robustness against steering vector mismatch of signals", IET RADAR SONAR NAVIGATION, THE INSTITUTION OF ENGINEERING AND TECHNOLOGY, UK, vol. 11, no. 12, 1 décembre 2017 (2017-12-01), pages 1831-1838, XP006064321, ISSN: 1751-8784, DOI: 10.1049/IET-RSN.2017.0245**
- **ZHANG YUPING ET AL: "A robust adaptive beamformer based on desired signal covariance matrix estimation", 2016 IEEE INTERNATIONAL CONFERENCE ON SIGNAL PROCESSING, COMMUNICATIONS AND COMPUTING (ICSPCC), IEEE, 5 août 2016 (2016-08-05), pages 1-4, XP033004355, DOI: 10.1109/ICSPCC.2016.7753672 [extrait le 2016-11-22]**

**Description**

L'invention concerne les systèmes de radio-communications, en particulier les systèmes de radio-communications terrestres ou par satellite et plus particulièrement la formation numérique de faisceaux.

La capacité des systèmes de télécommunications radio-mobiles (terrestres ou par satellite) est limitée par les interférences co-canal. En effet, bien que grâce à la formation numérique de faisceaux, il soit possible pour plusieurs utilisateurs distants de partager la même ressource fréquentielle (le même canal), l'isolation spatiale nécessaire à ce partage n'est cependant pas parfaite et conduit inévitablement à l'apparition de signaux d'interférences. La suppression totale ou partielle de ces signaux d'interférences est donc un objectif primordial du traitement numérique du signal associé à la formation de faisceaux.

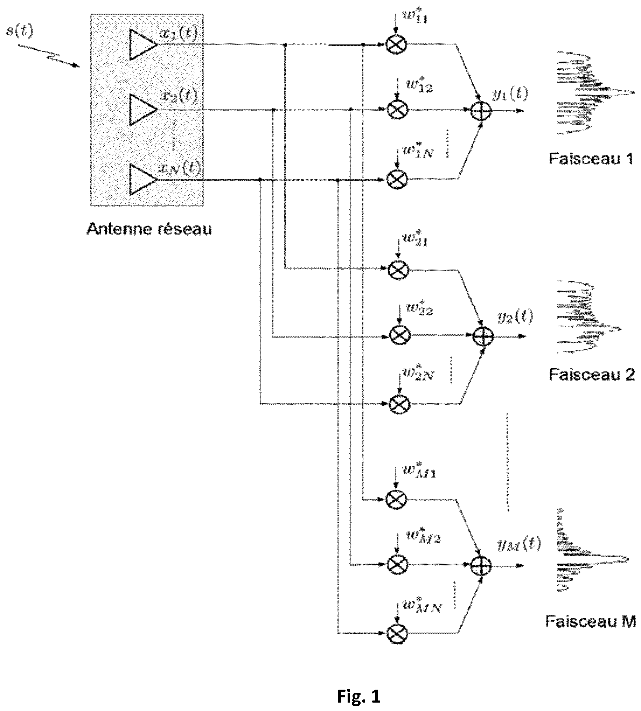

Dans le cas de la formation numérique de faisceaux en réception (figure 1), on considère $N$ éléments rayonnants d'une antenne réseau recevant les signaux x(t) = $[x_1(t), ... , x_N(t)]^T$ convertis en échantillons numériques $\underline{x}[k]$ = $[x_1[k],$ $x_2[k], ..., x_N[k]]^T$, $N$ étant un entier supérieur ou égal à 3. Les échantillons numériques permettent de construire une matrice de corrélation $R_x$ portant l'information des directions d'arrivée des signaux, qui sont constitués d'un signal utile, des signaux d'interférences et du bruit. Les signaux d'interférences sont également appelés interférences.

Le vecteur x[k] des échantillons du signal reçu sur les $N$ éléments rayonnants de l'antenne s'écrit :

$$\underline{x}[k] = [x_1[k], x_2[k], ..., x_N[k]]^T = \underline{s}_u[k] + \underline{s}_i[k] + \underline{s}_b[k] \qquad (1)$$

où x[k] représente les $K$ vecteurs de dimension $N \times 1$ des échantillons des signaux reçus, $k$ étant un entier naturel compris entre 1 et $K$, $K$ représentant le nombre d'échantillons, $\underline{s}_u[k]$ représente le signal utile et $\underline{s}_i[k]$ + $\underline{s}_b[k]$ les interférences et le bruit.

On se place dans le cadre de l'hypothèse bande étroite pour le réseau (H.L. Van Trees, « Optimum Array Processing », Part IV of Detection, Estimation and Modulation Theory, Wiley Interscience, 2002), c'est-à-dire que le retard maximum de propagation entre les éléments rayonnants de l'antenne est supposé très inférieur à $1/(\pi B)$, où $B$ désigne la largeur de bande du signal. Dans ce cas, le vecteur du signal utile $\underline{s}_u[k]$ s'écrit $\underline{s}_u[k]$ = $u[k]\underline{a}(\theta_u, \phi_u)$, avec $u[k]$ l'amplitude du signal utile et $\underline{a}(\theta_u, \phi_u)$ le vecteur directionnel de l'antenne dans la direction $(\theta_u, \phi_u)$ du signal utile. Selon l'hypothèse bande étroite, le vecteur directionnel est indépendant de la fréquence du signal.

De même, le vecteur des interférences $\underline{s}_i[k]$ s'exprime par $\underline{s}_i[k] = \sum_{l=1}^{L} i_l[k]\underline{a}(\theta_{i_l}, \phi_{i_l})$, avec $i_l[k]$ le signal de la $l$-ième interférence et $\underline{a}(\theta_{i_l}, \phi_{i_l})$ le vecteur directionnel de l'antenne dans la direction $(\theta_{i_l}, \theta_{i_l})$ de la $l$-ième interférence.

Le vecteur directionnel $\underline{a}(\theta, \phi)$ est un vecteur au sens algébrique, et plus précisément un vecteur de fonctions à valeur complexe des deux variables $\theta$ et $\phi$. Il représente la réponse en amplitude et en phase des $N$ éléments rayonnants de l'antenne réseau dans la direction $(\theta, \phi)$.

Ce vecteur directionnel peut être mesuré au laboratoire pour une antenne donnée et pour un ensemble de directions $(\theta, \phi)$. On peut également disposer d'un modèle analytique ou numérique du vecteur directionnel. Par exemple, pour une antenne de type réseau linéaire équi-réparti (RLE) à $N$ éléments rayonnants, la n-ième composante du vecteur $\underline{a}(\theta, \phi)$ a pour expression (avec $\phi$ = 90°) :

$$a_n(\theta) = \exp\left(j\frac{2\pi}{\lambda}d(n-1)\sin\theta\right) \qquad (2)$$

où $\lambda$ désigne la longueur d'onde et d la distance entre les éléments rayonnants.

Néanmoins, lorsque l'antenne est en fonctionnement, elle peut subir des variations de température ou des déformations géométriques. Les chaînes de réception radio-fréquences situées après l'antenne sont également soumises à des dérives en température et ne sont pas complètement identiques. Il s'ensuit que le vecteur directionnel « actuel » (celui de l'antenne en fonctionnement) est différent du vecteur directionnel « supposé » (celui mesuré au laboratoire ou donné par un modèle). La différence entre ces deux vecteurs, pour une direction donnée, est un vecteur d'erreurs appelé couramment « erreurs amplitudes / phases », puisqu'elles affectent aussi bien l'amplitude que la phase de chaque composante du vecteur directionnel. Les erreurs amplitudes / phases ont un effet délétère sur les performances de la plupart des méthodes de suppression d'interférences. Ces erreurs peuvent être dépendantes de la direction du signal, comme par exemple, les déformations géométriques, ou indépendantes de la direction, comme les disparités entre les chaînes de réception.

Le signal y[k] du faisceau formé s'écrit :

$$y[k] = \sum_{n=1}^{N} w_n^* x_n[k] = \underline{w}^H \underline{x}[k] \qquad (3)$$

où $\underline{w}^H$ est le transposé conjugué du vecteur de pondérations complexes $\underline{w} = [w_1, \dots, w_N]^T$.

Les faisceaux formés, tels que représentés sur la figure 1, peuvent donc s'écrire : $y_1[k] = \underline{w}_1^H \underline{x}_1[k]$ pour le faisceau 1, $y_2[k] = \underline{w}_2^H \underline{x}_2[k]$ pour le faisceau 2 et $y_M[k] = \underline{w}_M^H \underline{x}_M[k]$ pour le faisceau $M$.

La formation d'un faisceau dirigé vers le signal utile, avec suppression d'interférences, nécessite le calcul d'un vecteur de pondérations complexes de manière à ce que le signal en sortie du faisceau soit le plus proche possible du signal utile, soit $y[k] \approx u[k]$. Cela équivaut à maximiser le rapport de la puissance du signal utile à la puissance des interférences et bruit. Ce rapport, appelé et noté SINR (« Signal to Noise and Interference Ratio » en anglais), est un indicateur de la qualité de la communication et est directement lié au débit maximal de la liaison.

La matrice de corrélation des signaux reçus $R_x$, représentant la dépendance entre les échantillons du signal reçu sur les $N$ éléments rayonnants de l'antenne, s'écrit ici $R_x = R_u + R_{ib}$ avec $R_u$ la matrice de corrélation du signal utile et $R_{ib}$ la matrice de corrélation des interférences et du bruit.

L'estimation de la matrice $R_x$ à partir des échantillons du vecteur de signal reçu $x[k]$ constitue l'information de base utilisée par toutes les méthodes de suppression adaptatives d'interférences.

Le SINR s'exprime directement en fonction des matrices de corrélation et du vecteur de pondération $\underline{w}$ à calculer :

$$SINR = \frac{\underline{w}^H R_u \underline{w}}{\underline{w}^H R_{ib} \underline{w}} \qquad (4)$$

Les méthodes de suppression d'interférences ont pour but de maximiser le SINR et mettent souvent en œuvre l'inversion de la matrice de corrélation $R_x$ ou sa diagonalisation.

Suivant les systèmes, on peut distinguer trois situations classiques de mise en œuvre des méthodes de suppression d'interférences :

-   1ère situation : La position d'émission du signal utile, également appelée direction d'arrivée du signal utile, $(\theta_u, \phi_u)$, est connue, et il est possible d'observer la somme interférences et bruit en l'absence de signal utile. On a donc $R_x = R_{ib}$ et $(\theta_u, \phi_u)$ connus ;
-   2ème situation : La position du signal utile n'est pas connue mais on connaît précisément une partie du signal émis (des séquences pilotes, par exemple). On observe alors la somme du signal utile, des interférences et du bruit. On a donc $R_x = R_u + R_{ib}$ et $u[k]$ en partie connu ;
-   3ème situation : La position du signal utile est connue et il n'est pas possible d'observer la somme des interférences et du bruit en l'absence de signal utile. On observe alors la somme du signal utile, des interférences et du bruit. On a donc $R_x = R_u + R_{ib}$ et $(\theta_u, \phi_u)$ connus.

Les deux premières situations permettent d'obtenir des performances satisfaisantes en termes de suppression d'interférences à l'aide de méthodes classiques et bien connues, même en présence d'erreurs amplitudes / phases sur les vecteurs directionnels du signal utile et des interférences ou lorsque la connaissance de la position du signal utile $(\theta_u, \phi_u)$ est imprécise. Par exemple, la méthode « réponse sans distorsion à variance minimale» (MVDR : « Minimum Variance Distortionless Response » en anglais) peut être utilisée dans la première situation et dans la deuxième situation, la méthode « Erreur quadratique moyenne minimale » (MMSE : « Minimum Mean Square Error » en anglais) peut être mise en œuvre (H.L. Van Trees, « Optimum Array Processing », Part IV of Detection, Estimation and Modulation Theory, Wiley Interscience, 2002).

Cependant, en radio-communications terrestres ou spatiales, il n'est en général pas envisageable (pour des raisons d'efficacité spectrale, de débit et de contraintes au niveau du système) de réserver un créneau de fréquences ou de temps afin d'estimer la matrice de corrélation en l'absence de signal utile. La situation 1 n'est donc pas envisageable.

Il est néanmoins possible d'utiliser des séquences incorporées au signal utile en tant que signal connu, ce qui correspond à la situation 2. Mais la suppression des interférences co-canal nécessite alors pour chaque utilisateur l'identification de la séquence pilote qui lui est associée, ce qui, pour certains systèmes, complique notablement la mise en œuvre.

En ce qui concerne la situation 3, la méthode classique de suppression d'interférences est la méthode de Capon, qui consiste à minimiser la puissance totale du signal reçu sous une contrainte de directivité unité dans la direction du signal utile. La pondération $\underline{w}$ est alors calculée de la manière suivante (H.L. Van Trees, « Optimum Array Processing », Part IV of Detection, Estimation and Modulation Theory, Wiley Interscience, 2002) :

$$\underline{w} = \frac{R_x^{-1}\underline{a}(\theta_u, \phi_u)}{\underline{a}(\theta_u, \phi_u)^H R_x^{-1} \underline{a}(\theta_u, \phi_u)} \qquad (5)$$

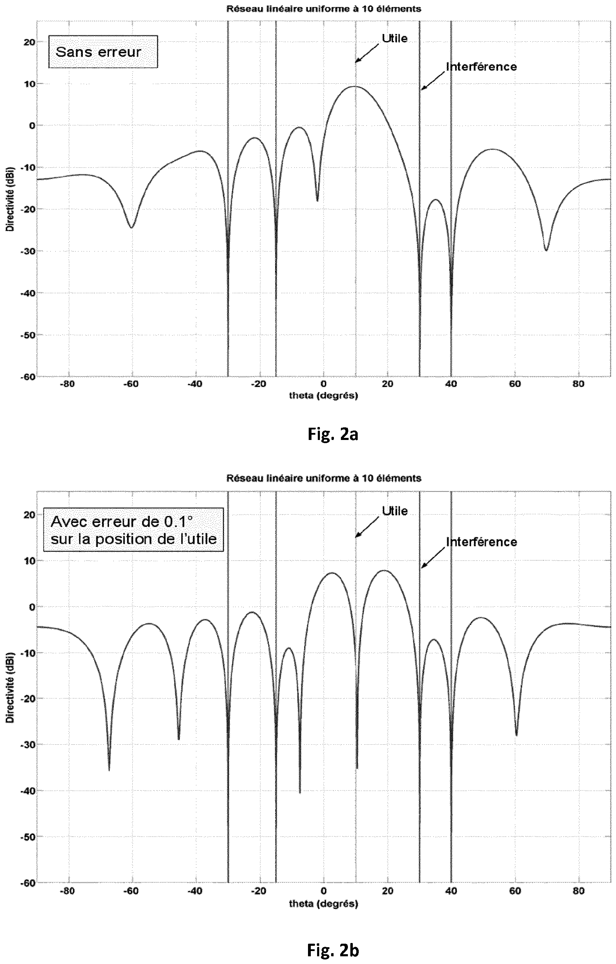

C'est seulement en l'absence d'erreurs amplitudes / phases et avec une connaissance parfaite de la position du signal utile, que la méthode classique de Capon permet d'obtenir des performances satisfaisantes. En effet, en présence d'erreurs sur les vecteurs directionnels ou bien lorsque la position du signal utile n'est pas précisément connue, la méthode de Capon conduit à une suppression non désirée du signal utile (figures 2a et 2b). Cet effet est néfaste et se manifeste même lorsque les erreurs sont de niveau faible. La méthode classique de Capon n'est donc pas robuste vis-à-vis des erreurs en présence de signal utile. L'article de Y. Wang et al., « Robust mainlobe interference suppression for coherent interference environment » publié dans « EURASIP Journal on advances in signal processing » en 2016 donne un exemple de la mise en œuvre de la méthode de Capon pour supprimer les signaux d'interférence dans le lobe principal d'un réseau d'antennes omnidirectionnelles.

Les figures 2a et 2b présentent un exemple de suppression d'interférences pour une antenne de type réseau linéaire équi-réparti (RLE) à 10 éléments. Sur la figure 2a, le signal utile n'est pas supprimé alors que sur la figure 2b, le signal utile est supprimé à cause de l'erreur de 0,1° sur la position du signal utile.

Un grand nombre de méthodes ont été proposées dans la littérature pour résoudre le problème de la robustesse de la formation de faisceaux adaptative en présence de signal utile. Ces méthodes appartiennent pour la plupart aux catégories suivantes (J. Li et P. Stoica, « Robust adaptive beamforming », Ed. Wiley, 2006 ; S.A. Vorobyov, « Principles of minimum variance robust adaptive beamforming design », Signal Processing, 93:3264-3277, 2013) :

1. **Méthodes de surcharge de la matrice de corrélation** (ou « Diagonal Loading » en anglais) (B.D. Carlson, « Covariance matrix estimation errors and diagonal loading in adaptive arrays », IEEE Transactions on Aerospace and Electronic Systems, 24:397-401, 1988) : Une constante positive $\lambda$ est ajoutée sur la diagonale de la matrice de corrélation des signaux reçus $R_x$, qui devient $R_x + \lambda I_N$, où $I_N$ représente la matrice identité d'ordre $N$. Cela permet de simuler l'addition d'un bruit fictif qui vient masquer le signal utile et éviter sa suppression, $\lambda$ étant la puissance du bruit fictif. Cependant, les performances de ces méthodes sont très sensibles au réglage de la constante $\lambda$ et, à ce jour, ce problème n'est pas résolu de manière satisfaisante.

2. **Méthodes avec contraintes de directivité, contraintes dérivées, etc ...** (M.H. Er, « Adaptive antenna array under directional and spatial derivative constraints », IEEE Proceedings H-Microwaves Antennas and Propagation, I35:414-419, 1988) : Il s'agit d'essayer de protéger le signal utile en imposant des contraintes, de manière à ce que la directivité du signal utile reste suffisamment élevée en présence d'erreurs. Les contraintes imposées consomment des degrés de liberté de l'antenne, ce qui se traduit par une réduction de la capacité à rejeter les interférences et donc par des performances peu élevées.

3. **Méthodes basées sur l'orthogonalité entre le sous-espace signal et le sous-espace bruit** (A. Haimovich et al., « Adaptive antenna arrays using eignevector methods », IEEE International Symposium on Antennas and Propagation, 3 :980-983, 1988) : Ces méthodes visent à réduire l'effet des erreurs grâce à une projection orthogonale. Néanmoins, elles sont peu efficaces car la présence du signal utile n'est pas suffisamment éliminée.

4. **Méthodes basées sur une sphère ou un ellipsoïde d'incertitude** (J. Li et al., « On robust Capon beamforming and diagonal loading », IEEE Transactions on Signal Processing, 51 :1702-1715, 2003) : Elles supposent, par exemple, que l'écart entre le vecteur directionnel actuel et le vecteur directionnel supposé du signal utile est borné, c'est-à-dire $\|\underline{a}_{\text{actuel}} - \underline{a}_{\text{supposé}}\| < \varepsilon$. Le calcul du vecteur de pondérations de la formation de faisceaux est alors obtenu à l'aide d'une optimisation sous une contrainte d'inclusion du vecteur directionnel dans la sphère ou l'ellipsoïde d'incertitude. Ces méthodes donnent de bons résultats tant que la puissance du signal utile est inférieure à la puissance des interférences. Lorsque le niveau de signal utile devient comparable ou supérieur au niveau des interférences, le signal utile est supprimé. Certaines de ces méthodes sont très complexes et coûteuses en ressource de calcul.

5. **Méthodes basées sur la reconstruction de la matrice de corrélation des interférences et du bruit** (Y.Gu et al., « Robust adaptive beamforming based on interference covariance matrix reconstruction and steering vector estimation », IEEE Transactions on Signal Processing, 60 :3881-3885, 2012) : Elles estiment les vecteurs directionnels des interférences de façon à construire une matrice $\hat{R}_{ib}$ peu différente de $R_{ib}$, de manière à se retrouver dans la situation 1 précédemment décrite, où les méthodes de suppression d'interférences sont robustes.

6. **Méthodes basées sur l'estimation des vecteurs directionnels** (A. Khabbazibasmen et al., « Robust adaptive beamforming based on steering vector estimation with as little as possible prior information », IEEE Transactions on Signal Processing, 2974-2987, 2012) : Elles partent du fait que la connaissance du vecteur directionnel du signal utile est importante pour améliorer la robustesse de la méthode de Capon. Elles ne sont pas robustes lorsque le rapport signal à bruit du signal utile est élevé.

7. **Méthodes probabilistes** (S. Vorobyov et al., « On the relationship between robust minimum variance beamformers with probabilistic and worst-case distortionless response constraints », IEEE Transactions on Signal Processing, 56:5719-5724, 2008) : Elles partent du constat que les erreurs de position et d'amplitudes / phases sont aléatoires et calculent une pondération robuste de telle manière que la probabilité de suppression du signal utile reste faible. Comme les méthodes précédentes, ces méthodes ont des performances médiocres lorsque le rapport signal à bruit du signal utile devient élevé.

8. **Autres** méthodes : Elles sont des mélanges des méthodes précédentes.

L'invention vise à surmonter les inconvénients et limitations précités de l'art antérieur. Plus précisément, elle vise à proposer un procédé de suppression adaptive d'interférences en présence d'un signal utile, ce procédé étant particulièrement robuste aux erreurs amplitudes / phases indépendantes de la direction et aux imprécisions de position, même lorsque celles-ci sont élevées.

Un objet de l'invention est donc un procédé de réception d'un signal, comprenant un signal utile, des signaux d'interférences et du bruit, et de suppression des signaux d'interférences dans un récepteur multivoies comprenant les étapes de :

(a) Réception, transposition en fréquence et conversion numérique du signal reçu sur chacune des voies du récepteur multi-voies, de manière à obtenir un signal multivoies numérique, ce signal multivoies correspondant à la somme du signal utile, des signaux d'interférences et du bruit, le récepteur comprenant une antenne qui est définie par une fonction vectorielle à valeurs complexes $\underline{a}(\theta, \phi)$ des deux variables $\theta$ et $\phi$ définissant une direction dans l'espace, comprenant une composante pour chaque voie de l'antenne et dont chaque composante représente la réponse en amplitude et en phase d'une voie respective de l'antenne dans la direction $(\theta, \phi)$, le signal utile étant défini par une amplitude $u[k]$ et par une direction actuelle $(\theta_u, \phi_u)$ inconnus, les signaux d'interférences étant définis par une amplitude $s_j[k]$ et par une direction actuelle $(\theta_{i\_l}, \phi_{i\_l})$ inconnus, $l$ représentant le l-ième signal d'interférences, le vecteur complexe $\underline{a}(\theta_u, \phi_u)$, dit vecteur directionnel actuel du signal utile, comprenant une composante pour chaque voie de l'antenne et dont chaque composante représente la réponse en amplitude et phase d'une voie respective de l'antenne dans la direction d'arrivée actuelle du signal utile $(\theta_u, \phi_u)$, et les vecteurs complexes $\underline{a}(\theta_{il}, \phi_{il})$, dits vecteurs directionnels actuels des signaux d'interférences, comprenant chacun une composante pour chaque voie de l'antenne et dont chaque composante représente la réponse en amplitude et phase d'une voie respective de l'antenne dans la direction d'arrivée vraie des signaux d'interférences $(\theta_{i\_l}, \phi_{i\_l})$ ;

(b) Estimation, à partir du signal multivoies numérique, d'une matrice $\hat{R}_x$ de corrélation des signaux reçus sur les voies du récepteur ;

(c) Estimation de la variance du bruit, à partir des vecteurs propres et des valeurs propres de la matrice de corrélation $\hat{R}_x$ ;

(d) Estimation initiale de la direction d'arrivée du signal utile $(\{\hat{\theta}_u, \hat{\phi}_u\})$ et des signaux d'interférences $(\hat{\theta}_{i\_l}, \hat{\phi}_{i\_l})$ à partir du calcul du spectre spatial MUSIC, puis calcul des vecteurs directionnels supposés dans les directions estimées du signal utile $\underline{\tilde{a}}(\hat{\theta}_u, \hat{\phi}_u)$ et des signaux d'interférences $\tilde{a}(\hat{\theta}_{i\_l}, \hat{\phi}_{i\_l})$ ;

(e) Initialisations :

- Calcul d'une matrice diagonale dont les éléments sont les puissances du signal utile et des signaux d'interférences calculés à partir des vecteurs directionnels estimés dans l'étape (d) et de la matrice de corrélation $\hat{R}_x$ ; et

- Calcul d'une matrice diagonale complexe dont les éléments représentent l'écart entre les vecteurs directionnels actuels et les vecteurs directionnels supposés dans l'étape (d), la matrice étant dite matrice des erreurs amplitudes / phases ;

(f) Calcul par itérations :

- D'une matrice des vecteurs directionnels actuels estimés dont les éléments sont le produit des éléments de la matrice des erreurs amplitudes / phases et des vecteurs directionnels supposés dans les directions estimées ;
- Des puissances des signaux utiles et des signaux d'interférences à partir de la matrice des vecteurs directionnels actuels estimés ;
- De la matrice des erreurs amplitudes / phases ; et
- des directions d'arrivée $(\hat{\theta}_u, \hat{\phi}_u)$ du signal utile et $(\hat{\theta}_{il}, \hat{\phi}_{il})$ des signaux d'interférences,

le calcul des vecteurs directionnels actuels du signal utile et des signaux d'interférences s'effectuant, pour une première itération par rapport aux vecteurs directionnels supposés calculés dans l'étape (d) et aux erreurs amplitudes / phases initialisées à l'étape (e), puis pour chacune d'une pluralité d'itérations suivantes, par rapport aux vecteurs directionnels supposés et aux erreurs amplitudes / phases calculés durant l'itération précédente, le nombre d'itérations étant prédéfini par l'utilisateur ;
et

(i) Suppression des signaux d'interférences dans le signal reçu lors de l'étape (a) ;
Selon des modes de réalisation particuliers de l'invention :

- l'étape (f) est suivie d'une étape (g) de reconstruction de la matrice de corrélation des signaux d'interférences et du bruit, cette étape étant effectuée avant ladite étape (i) ;
- l'étape (g) est suivie d'une étape (h) de calcul d'une matrice de pondération à partir de la matrice de corrélation calculée durant l'étape (g), l'étape (h) étant effectuée avant l'étape (i) ; et
- le nombre d'itérations est compris entre 15 et 25 ; et plus particulièrement est de 20.

L'invention porte également sur un récepteur multi-voies configuré pour recevoir un signal comprenant un signal utile et des signaux d'interférences sur une pluralité de voies, et rejeter les signaux d'interférences, comprenant une antenne comprenant au moins trois éléments rayonnants; au moins trois chaînes radio pour la réception, transposition et discrétisation dudit signal reçu sur chacune des voies du récepteur, afin d'obtenir un signal multivoies discrétisé, les chaînes radio comprenant chacune un des éléments rayonnants de l'antenne ; et des circuits de calculs, caractérisé en ce que les circuits de calculs sont configurés pour la suppression desdits signaux d'interférences selon le procédé d'un des modes de réalisation précédents de l'invention.
Selon des modes de réalisation particuliers de l'invention :

- les circuits de calculs comprennent un processeur de signal numérique DSP, ou un circuit intégré programmable ou un circuit intégré à application spécifique ;
- le récepteur multi-voies appartient à la partie réception de la charge utile d'un satellite ; et
- le récepteur multi-voies appartient à une station de base d'un système radio-mobile terrestre.

D'autres caractéristiques, détails et avantages de l'invention ressortiront à la lecture de la description faite en référence aux figures annexées données à titre d'exemple et qui représentent, respectivement :

- La figure 1, un schéma explicatif de la formation de faisceaux en réception ;
- Les figures 2a et 2b, un exemple de suppression d'interférences réalisée avec une méthode de l'art antérieur, la méthode de Capon ;
- La figure 3, un schéma illustrant le procédé de suppression d'interférences selon un mode de réalisation de l'invention ;
- Les figures 4a et 4b, un exemple de suppression d'interférences réalisé selon un mode de réalisation de l'invention ; et
- La figure 5, un récepteur multi-voies selon un mode de réalisation de l'invention.

Dans la suite, les notations suivantes sont utilisées :

- $^\wedge$ (chapeau) désigne une quantité estimée ;
- $^\sim$ (tilde) désigne une quantité dont on connaît une valeur approximative (valeur « supposée »)
- $^H$ désigne l'opérateur transposé-conjugué ; et
- $^T$ désigne l'opérateur transposé.

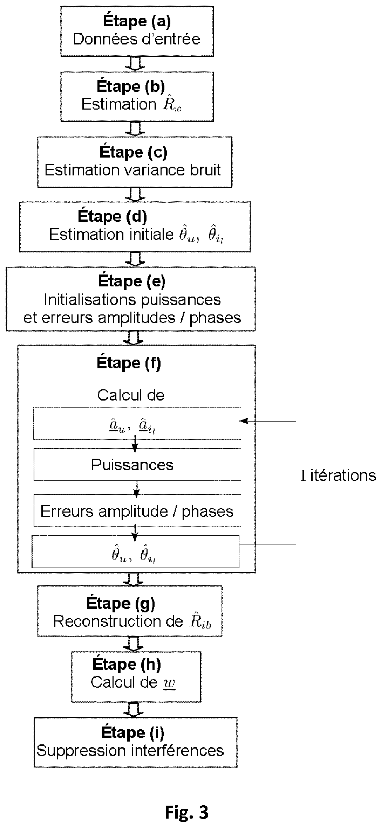

La figure 3 représente un schéma illustrant le procédé de suppression des interférences selon un mode de réalisation de l'invention. Le signal reçu comprend un signal utile, des signaux d'interférences et du bruit. Pour simplifier les notations, une antenne unidimensionnelle est considérée. Les vecteurs directionnels $\underline{a}(\theta)$ dépendent dans ce cas uniquement de l'angle d'élévation $\theta$. Le procédé se généralise sans difficulté au cas d'une antenne bi-dimensionnelle dont les vecteurs directionnels $\underline{a}(\theta, \phi)$ dépendent de l'élévation $\theta$ et de l'azimut $\phi$.
La première étape du procédé, étape (a), consiste à recevoir, transposer en fréquence et convertir en numérique un signal reçu sur chacune des voies d'un récepteur multi-voies de manière à obtenir un signal multi-voies numérique. Le signal multi-voies correspond à la somme du signal utile, des signaux d'interférences et du bruit. La réponse de l'antenne dans la direction $\theta_u$ du signal utile est décrite par le vecteur directionnel actuel $\underline{a}(\theta_u)$ comprenant une composante pour chaque voie du récepteur multi-voies. La réponse de l'antenne dans la direction $\theta_{i_l}$ du $l$-ième signal d'interférence est décrite par le vecteur directionnel actuel $\underline{a}(\theta_{li})$ comprenant une composante pour chaque voie du récepteur multi-voies.

Il est supposé que le signal multi-voies numérique comprend un nombre fini $K$ de vecteurs d'échantillons et que le récepteur multi-voies comprend $N$ éléments rayonnants, $N$ étant un entier supérieur ou égal à 3 et $K$ est un entier positif. Sont également supposés connus :

- l'erreur angulaire maximale $\Delta_{max}$ sur la position du signal utile ;
- la position angulaire supposée $\theta_u$ du signal utile ; et
- les vecteurs directionnels $\tilde{\underline{a}}(\theta)$ supposés pour toute direction $\theta$, ces vecteurs étant mesurés en laboratoire ou calculés selon un modèle.

Il est également supposé que les directions des signaux d'interférences ne se situent pas dans le secteur angulaire $[\tilde{\theta}_u - \Delta_{max} ; \tilde{\theta}_u + \Delta_{max}]$, et que les erreurs amplitudes / phases sont indépendantes de la direction. Cela permet d'obtenir une matrice G complexe mais diagonale, G étant la matrice des erreurs amplitudes / phases. Néanmoins, il est également possible d'appliquer le procédé dans le cas d'erreurs amplitudes / phases dépendantes de la direction.

Durant la seconde étape du procédé, étape (b), la matrice de corrélation, notée $\hat{R}_x$, est estimée à partir des $K$ vecteurs d'échantillons du signal reçu $\underline{x}[k]$ à l'aide de l'estimateur échantillonné classique :

$$\hat{R}_x = \frac{1}{K} \sum_{k=1}^{K} \underline{x}[k] \, \underline{x}[k]^H \qquad (6)$$

L'étape (c) du procédé consiste à estimer la puissance du bruit inclus dans le signal reçu. Pour cela, la décomposition en valeurs propres et vecteurs propres de la matrice de corrélation estimée $\hat{R}_x$ est calculée. La matrice $\hat{R}_x$ peut alors s'écrire :

$$\hat{R}_x = U\Lambda U^H \qquad (7)$$

où $U$ est une matrice unitaire complexe de dimensions $N \times N$ contenant les vecteurs propres de $\hat{R}_x$ et A est une matrice diagonale réelle de dimensions $N \times N$ contenant les valeurs propres de $\hat{R}_x$. Comme $\hat{R}_x$ est hermitienne, c'est-à-dire $\hat{R}_x = \hat{R}_x^H$, et définie positive, ses valeurs propres sont réelles positives.

On note $L$ le nombre de signaux d'interférences, avec $L$ un entier supérieur ou égal à 1. Si ce nombre $L$ n'est pas connu, on estime le nombre total M de signaux (signal utile plus signaux d'interférences) à l'aide du critère classique d'Akaike (H.L. Van Trees, « Optimum Array Processing », Part IV of Detection, Estimation and Modulation Theory, Wiley Interscience, 2002), lorsque le rapport signal à bruit des signaux est suffisamment élevé, typiquement supérieur à -10 dB.

D'après la publication de Schmidt (R.O. Schmidt, « Multiple Emitter Location and Signal Parameter Estimation », IEEE Transactions on Antennas and Propagation, 276-280, 1986), la matrice A possède $(N - M)$ valeurs propres identiques, égales à la variance du bruit, notée $\sigma^2$. En réordonnant les valeurs propres (et de façon conjointe les vecteurs propres), on a alors :

$$\Lambda = \mathrm{diag}[\lambda_1, \lambda_2, \ldots, \lambda_M, \sigma^2, \ldots, \sigma^2] \qquad (8)$$

où $\lambda_1 > \lambda_2 > \cdots > \lambda_M$ sont les valeurs propres de $\hat{R}_x$.

La forme de la matrice A permet d'estimer directement la variance du bruit $\hat{\sigma^2}$ qui est obtenue par la moyenne des $(N - M)$ éléments diagonaux les plus faibles de A.

Lors de l'étape (d), les directions d'arrivée des signaux utile et d'interférences sont estimées selon la méthode classique MUSIC. Pour cela, les matrices U et $\Lambda$ sont décomposées en deux parties, l'une pour le bruit et l'autre pour le signal utile et les signaux d'interférences. L'équation (7) devient alors :

$$\hat{R}_x \approx U_s \Lambda_s U_s^H + \hat{\sigma}^2 U_b U_b^H \qquad (9)$$

où $\Lambda_s$ est la matrice diagonale réelle des M valeurs propres $\lambda_1$ à $\lambda_M > \hat{\sigma^2}$, $U_s$ est la matrice des M vecteurs propres associés et $U_b$ est la matrice des $(N - M)$ vecteurs propres associés aux $(N - M)$ valeurs propres approximativement égales à $\hat{\sigma^2}$. La matrice $U_s$ est complexe, unitaire, de taille $N \times$ M, de rang M et engendre le sous-espace signal (signal utile et signaux d'interférences). La matrice $U_b$ est complexe, unitaire, de taille $N \times (N - M)$, de rang $(N - M)$ et engendre le sous-espace bruit.

Le sous-espace bruit et le sous-espace signal sont orthogonaux. Le produit scalaire de tout vecteur du sous-espace signal par tout vecteur du sous-espace bruit est donc nul. Or, les vecteurs directionnels actuels du signal utile $\underline{a}(\theta_u)$ et des signaux d'interférences $\underline{a}(\theta_{i_l})$ appartiennent au sous-espace signal, on a donc :

$$U_b^H \underline{a}(\theta_u) = \underline{0}$$

$$U_b^H \underline{a}\big(\theta_{i_1}\big) = \underline{0}$$

$$\dots \qquad (10)$$

$$U_b^H \underline{a}\big(\theta_{i_L}\big) = \underline{0}$$

On exploite la propriété d'orthogonalité pour identifier les directions d'arrivée $\theta_u$, $\theta_{i_1}$, ..., $\theta_{i_L}$ du signal utile et des interférences. Pour cela, on construit pour chaque direction $\theta$ la quantité réelle positive $P(\theta)$, qui est appelée le spectre spatial MUSIC ou le spectre MUSIC. Ce spectre devient infini lorsque $\theta$ est identique à l'une des directions d'arrivée des signaux et permet donc d'identifier ces directions. Il s'exprime par l'équation suivante :

$$P(\theta) = \frac{1}{\underline{a}(\theta)^H U_b U_b^H \underline{a}(\theta)} \qquad (11)$$

et a pour propriété $P(\theta) \xrightarrow[\theta=\theta_u]{} \infty$ et $P(\theta) \xrightarrow[\theta=\theta_{i_l}]{} \infty$ avec $l = 1, 2, ..., L$.

En pratique, on ne connaît pas les vecteurs directionnels actuels $\underline{a}(\theta)$, mais seulement les vecteurs directionnels supposés $\underline{\tilde{a}}(\theta)$. On calcule alors une estimation du spectre spatial MUSIC sous la forme :

$$\hat{P}(\theta) = \frac{1}{\underline{\tilde{a}}(\theta)^H U_b U_b^H \underline{\tilde{a}}(\theta)} \qquad (12)$$

Les M maximas les plus forts, c'est-à-dire les M valeurs de $\theta$ qui maximisent $\hat{P}(\theta)$ correspondent aux directions d'arrivée des M signaux (signal utile et signaux d'interférences). D'après les hypothèses initiales, l'angle $\hat{\theta}_u$ situé par hypothèse dans l'intervalle $[\tilde{\theta}_u - \Delta_{max} \; ; \; \tilde{\theta}_u + \Delta_{max}]$ correspond à une estimation de l'angle du signal utile, tandis que les $L = M - 1$ autres angles $\hat{\theta}_{i_l}$, situés en dehors de cet intervalle correspondent aux estimations des angles des $L$ signaux d'interférences. Grâce à ces estimations, on peut obtenir une estimation initiale des vecteurs directionnels supposés $\underline{\tilde{a}}(\hat{\theta}_u)$ du signal utile et $\underline{\tilde{a}}(\hat{\theta}_{i_l})$ des signaux d'interférences dans les directions estimées. On peut alors former la matrice

$\hat{\tilde{A}} = [\underline{\tilde{a}}(\tilde{\theta}_u), \underline{\tilde{a}}(\hat{\theta}_{i_1}), ..., \underline{\tilde{a}}(\hat{\theta}_{i_L})]$ des vecteurs directionnels supposés dans les directions estimées.

En notant $A = [\underline{a}(\theta_u), \underline{a}(\theta_{i_1}), ..., \underline{a}(\theta_{i_L})]$ la matrice $N \times M$ des vecteurs directionnels actuels et P la matrice diagonale réelle des puissances des M signaux, la matrice de corrélation $\hat{R}_x$ peut s'écrire :

$$\hat{R}_x \approx APA + \hat{\sigma}^2 I_N \qquad (13)$$

En utilisant la décomposition propre de $\hat{R}_x$, l'équation ci-dessus est équivalente à :

$$APA \approx U_S \Gamma_S U_S^H \qquad (14)$$

avec $\Gamma_s = \Lambda_s - \hat{\sigma}^2 I_M$.

Weiss et Friedlander (A.J. Weiss et B. Friedlander, « « Almost blind » steering vector estimation using second-order moments », IEEE Transactions on Signal Processing, 56 : 5719-5724, 2008) ont montré que l'équation (14) est vraie si et seulement si il existe une matrice unitaire complexe Q (matrice de rotation) telle que :

$$AP^{1/2} \approx U_s \Gamma_s^{1/2} Q \qquad (15)$$

Le calcul de la matrice A peut alors être réalisé en minimisant le carré de la norme de Frobenius (somme des modules carrés des éléments) de la différence des deux membres de l'équation ci-dessus, soit $\left\| AP^{1/2} - U_s \Gamma_s^{1/2} Q \right\|_F^2$ . Cette minimisation est effectuée à l'aide de l'algorithme itératif de l'étape (f), dont le principe est dû à Weiss et Friedlander.

Pour cela, on fait l'hypothèse que la matrice A des vecteurs directionnels actuels peut s'écrire sous la forme :

$$A = G\tilde{A} \qquad (16)$$

avec G une matrice complexe diagonale $N \times N$. La matrice G représente la matrice des erreurs amplitudes / phases, indépendantes de la direction. La matrice G est inconnue et devra être estimée dans l'étape (f). La matrice P diagonale réelle des puissances des signaux est également inconnue et sera estimée aussi dans l'étape (f). Dans la suite, on note Â, Ĝ et $\hat{P}$ les estimées des matrices $A$, $G$ et P. On a donc, par hypothèse :

$$\hat{A} = \hat{G}\hat{\tilde{A}} \qquad (17)$$

L'étape (e) est une étape d'initialisation de la partie itérative (f) du procédé. La matrice G est initialisée à la matrice identité, ce qui revient à initialiser la matrice Â à $\hat{\tilde{A}}$.

En utilisant l'estimateur de puissance de Capon, les éléments de la matrice $\hat{P}$ sont initialisés à $1/\left[ \underline{\tilde{a}}(\theta)^H \hat{R}_x^{-1} \underline{\tilde{a}}(\theta) \right]$ où $\theta = \hat{\theta}_u, \tilde{\theta}_{i_1}, ..., \hat{\theta}_{i_L}$.

On calcule également les matrices constantes suivantes :

$$\Gamma_s = \Lambda_s - \hat{\sigma}^2 I_M \qquad (18)$$

$$B = U_s \Gamma_s^{1/2} \qquad (19)$$

La matrice $\Gamma_s$ est carrée diagonale réelle de taille M × M, la matrice $I_M$ est la matrice identité d'ordre M et la matrice $B$ est rectangulaire complexe de taille $N \times$ M.

L'étape (f) consiste alors à calculer, par itérations, la matrice G de manière à calculer les vecteurs directionnels actuels à partir des vecteurs directionnels supposés dans les directions estimées. Le nombre d'itérations est fini et fixé par l'utilisateur. Il est généralement compris entre 15 et 25 et peut par exemple être égal à 20 pour une antenne de type réseau linéaire équi-réparti à 10 éléments rayonnants. Pour la première itération, la matrice Â est calculée à partir des matrices G et $\hat{\tilde{A}}$ obtenues lors de l'étape (e). Pour les itérations suivantes, la matrice Â est calculée selon l'équation (17), avec les matrices G et $\hat{\tilde{A}}$ obtenues à l'itération précédente.

À chaque itération, on calcule dans un premier temps la décomposition en valeurs singulières (SVD) de la matrice $B^H \hat{A} \hat{P}^{1/2}$ de manière à obtenir :

$$B^H \hat{A} \hat{P}^{1/2} = U' \Sigma V^H \qquad (20)$$

avec $U'$ et V les matrices des vecteurs propres à gauche et à droite de $B^H \hat{A} \hat{P}^{1/2}$ et $\Sigma$ la matrice diagonale des valeurs singulières. Les matrices U' et V sont complexes, unitaires, de taille M × M. On peut alors montrer que la matrice de rotation Q est telle que :

$$Q = U'V^H \qquad (21)$$

Puis dans un second temps, on calcule les éléments $\hat{p}_m^{1/2}$ de la matrice $\hat{P}^{1/2}$. Pour cela, on note $\underline{u}_m$ la m-ième colonne de la matrice $\hat{A}$ et $\underline{v}_m$ la m-ième colonne de la matrice $BQ$. Les vecteurs complexes $\underline{u}_m$ et $\underline{v}_m$ sont de taille $N \times 1$. Les éléments diagonaux réels $\hat{p}_m^{1/2}$ de $\hat{P}^{1/2}$ s'écrivent, pour m, entier naturel compris entre 1 et M :

$$\hat{p}_m^{1/2} = \max \left\{ 0 \; ; \; \frac{\Re\left[\underline{v}_m^H \underline{u}_m\right]}{\left\|\underline{v}_m\right\|^2} \right\} \qquad (22)$$

Puis, dans un troisième temps les erreurs amplitudes / phases, c'est-à-dire la matrice G, sont estimées. Pour cela, on note $\underline{y}_n$ le vecteur colonne correspondant à la transposition de la n-ième ligne de la matrice $\hat{A}\hat{P}^{1/2}$, et $\underline{z}_m$ le vecteur colonne correspondant à la transposition de la n-ième ligne de la matrice $BQ$. Les vecteurs $\underline{y}_n$ et $\underline{z}_n$ sont de taille $M \times 1$. Les éléments diagonaux complexes $\hat{g}_n$ de la matrice G sont calculés par l'équation suivante, où n, entier naturel, est compris entre 1 et $N$ :

$$\hat{g}_n = \frac{\underline{y}_n^H \underline{z}_n}{\left\|\underline{y}_n\right\|^2} \qquad (23)$$

Les $\hat{g}_n$ représentent les estimations des erreurs amplitudes / phases, supposées indépendantes de la direction.

Grâce à la nouvelle estimation de G, il est possible de réestimer plus précisément les vecteurs directionnels actuels. Puis, ces nouveaux vecteurs directionnels actuels vont être utilisés pour calculer un nouveau spectre spatial MUSIC et obtenir une nouvelle estimation des directions d'arrivée. Puis, on passe à l'itération suivante et on calcule à nouveau les matrices Q, $\hat{P}^{1/2}$, $\hat{G}$, etc ...

Les équations (21) à (23) sont basées sur l'algorithme de Weiss-Friedlander (A.J. Weiss et B. Friedlander, « « Almost Blind » steering vector estimation using second-order moments », IEEE Transactions on Signal Processing, 44 :1024-1027, 1996).

À l'issue de ces itérations, on dispose alors :

- d'une estimation des directions d'arrivée des signaux $\hat{\theta}_u$, $\theta_{i_1}$, ..., $\hat{\theta}_{i_L}$ ;
- d'une estimation de la matrice diagonale complexe G des erreurs amplitudes / phases ; et
- d'une estimation de la matrice diagonale réelle $\hat{P}$ des puissances des signaux.

En utilisant ces résultats, il est possible d'estimer les vecteurs directionnels actuels du signal utile et des interférences selon deux méthodes différentes, appelées « méthode 1 » et « méthode 2 », que l'on décrit ci-dessous.

Pour la méthode 1, on note $\hat{\underline{a}}_u^{(1)}$ l'estimation du vecteur directionnel actuel du signal utile et $\hat{\underline{a}}_{i_l}^{(1)}$ celle du signal d'interférence $I$.

De même, pour la méthode 2, on note $\hat{\underline{a}}_u^{(2)}$ l'estimation du vecteur directionnel actuel du signal utile et $\hat{\underline{a}}_{i_l}^{(2)}$ celle du signal d'interférence $I$.

Pour la méthode 1, d'après (17), on a de manière directe :

$$\hat{\underline{a}}_u^{(1)} = \hat{G}\underline{\tilde{a}}\left(\hat{\theta}_u\right) \qquad (24)$$

$$\hat{\underline{a}}_{i_l}^{(1)} = \hat{G}\underline{\tilde{a}}\left(\hat{\theta}_{i_l}\right) \qquad (25)$$

Pour la méthode 2, on utilise l'équation (15) et on en déduit :

$$\hat{A} \approx U_s \Gamma_s^{1/2} Q\hat{P}^{-1/2} = BQ\hat{P}^{-1/2} \qquad (26)$$

Le vecteur directionnel $\hat{\underline{a}}_u^{(2)}$ est alors la première colonne de la matrice $BQ\hat{P}^{-1/2}$ et le vecteur directionnel $\hat{\underline{a}}_{i_l}^{(2)}$ en est la $l$-ième colonne.

On note $\hat{A}_i^{(j)} = [\hat{\underline{a}}_{i_1}^{(j)}, \ldots, \hat{\underline{a}}_{i_L}^{(j)}]$ la matrice des vecteurs directionnels actuels estimés des interférences pour la méthode j ($j$ = 1, 2) et $\hat{P}_i$ la matrice diagonale des puissances estimées $\hat{p}_{i_1}, \ldots, \hat{p}_{i_L}$ des signaux d'interférences.

Alors, à l'étape (g), il est possible d'estimer (« reconstruire ») la matrice de corrélation $\hat{R}_{ib}$ des interférences et du bruit sous la forme (pour j = 1, 2) :

$$\hat{R}_{ib}^{(j)} = \hat{A}_i^{(j)}\hat{P}_i^{(j)}\hat{A}_i^{(j)H} + \hat{\sigma}^2 I_N \qquad (27)$$

La matrice de corrélation $\hat{R}_{ib}^{(j)}$ des interférences et du bruit peut alors être utilisée pour appliquer la méthode MVDR, afin de calculer le vecteur de pondération de formation de faisceaux sous la forme suivante (H.L. Van Trees, « Optimum Array Processing », Part IV of Detection, Estimation and Modulation Theory, Wiley Intersciences, 2002) :

$$\underline{w}_{MVDR} = \frac{R_{ib}^{-1}\underline{a}_u}{\underline{a}_u^H R_{ib}^{-1}\underline{a}_u} \qquad (28)$$

Comme la matrice $R_{ib}$ ne contient pas le signal utile, la méthode MVDR est robuste.

En ne tenant pas compte du dénominateur, qui n'est qu'un facteur de proportionnalité et n'influe pas sur le SINR, on peut donc calculer un vecteur de pondérations pour chaque méthode :

$$\underline{w}^{(j)} = \left[R_{ib}^{(j)}\right]^{-1}\hat{\underline{a}}_u^{(j)} \qquad (29)$$

Les vecteurs de pondérations obtenus pour j = 1, 2 sont ensuite normalisés de manière à avoir $\|\underline{w}^{(1)}\| = \|\underline{w}^{(2)}\|$ = 1. Le choix entre les deux vecteurs de pondérations se fait en comparant la puissance totale de sortie et en choisissant le vecteur de pondérations qui fournit la puissance la plus faible, car c'est celle qui rejette a priori le mieux les signaux d'interférences, à condition bien sûr que le signal utile ait été préservé.

On obtient alors le vecteur de pondérations final :

$$\begin{aligned} \underline{w} &= \underline{w}^{(1)}, \quad \text{si } \underline{w}^{(1)H}\hat{R}_x\underline{w}^{(1)} < \underline{w}^{(2)H}\hat{R}_x\underline{w}^{(2)} \\ \underline{w} &= \underline{w}^{(2)}, \quad \text{sinon} \end{aligned} \qquad (30)$$

En pratique, on observe dans les simulations que la méthode 1 est choisie le plus souvent et que les performances des deux méthodes se rejoignent lorsque le nombre d'échantillons $K$ devient élevé.

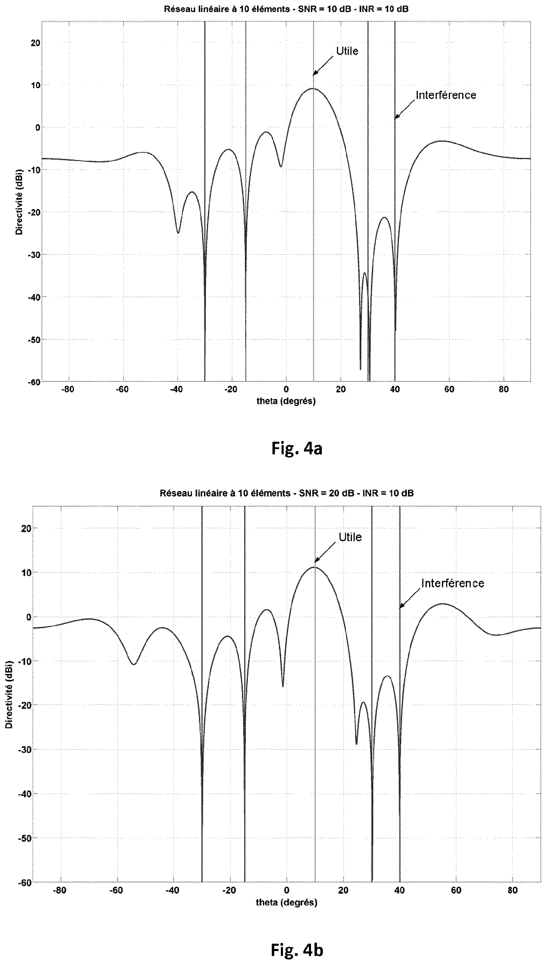

Ce procédé de suppression d'interférences peut être implémenté dans les circuits de calcul d'un récepteur multi-voies. Les circuits de calcul peuvent être un processeur de signal numérique DSP, un circuit intégré programmable FPGA ou un circuit intégré à application spécifique ASIC. Les figures 4a et 4b présentent un exemple de suppression des signaux d'interférences selon un mode de réalisation de l'invention réalisé avec une antenne de type RLE à 10 éléments rayonnants omni-directionnels. Les figures représentent le diagramme (la directivité) d'un faisceau formé avec le procédé selon l'invention pour cette antenne réseau. Quatre signaux d'interférences sont présents dans le signal reçu. Pour la figure 4a, le rapport signal à bruit SNR est de 10 dB et pour la figure 4b, le SNR est de 20 dB. On peut constater que dans les deux cas, le signal utile est conservé et que les interférences sont bien supprimées.

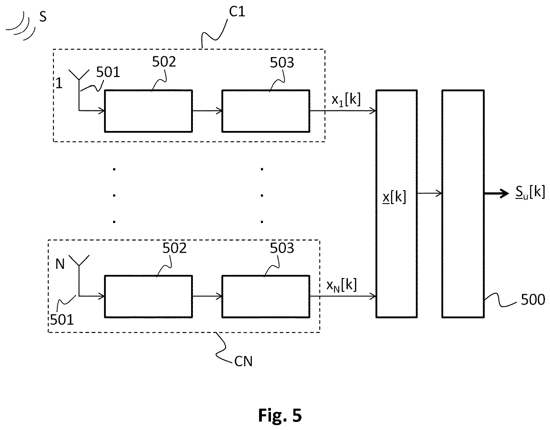

La figure 5 présente un récepteur multi-voies selon un mode de réalisation de l'invention. Celui-ci comprend $N$ chaines radio-fréquences (RF), avec $N$ un entier supérieur ou égal à 3. Seules la première chaîne RF C1 et la N-ième chaîne RF CN sont représentées sur cette figure. Un signal S comprenant un signal utile, des signaux d'interférences et du bruit est reçu par les $N$ chaînes RF grâce à leur élément rayonnant 501. Le signal ainsi reçu sur chacune des $N$ chaînes RF est transposé en fréquence 502 puis converti numériquement par un convertisseur analogique-numérique 503. Les circuits de calculs 500 du récepteur multi-voies reçoivent ainsi un vecteur d'échantillons *x[k]*, tel que *x[k]* = [$x_1[k]$, ..., $x_N[k]$]$^T$ est le signal reçu, transposé en fréquence et converti numériquement par la n-ième chaîne RF, n étant un entier compris entre 1 et *N*. Les circuits de calculs 500 appliquent le procédé de suppression des signaux d'interférences selon l'invention afin de fournir en sortie le signal utile $S_u[k]$.

## Revendications

**1.** Procédé de réception d'un signal, le signal comprenant un signal utile, des signaux d'interférences et du bruit, et de suppression des signaux d'interférences dans un récepteur multi-voies comprenant les étapes de :

(a) Réception, transposition en fréquence et conversion numérique du signal reçu sur chacune des voies du récepteur multi-voies, de manière à obtenir un signal multi-voies numérique, ce signal multi-voies correspondant à la somme du signal utile, des signaux d'interférences et du bruit, le récepteur comprenant une antenne réseau qui comprend une pluralité d'éléments rayonnants, dont chacun correspond à une des voies du récepteur multi-voies, et l'antenne réseau est définie par une fonction vectorielle à valeurs complexes $\underline{a}(\theta,\phi)$ des deux variables $\theta$ et $\varphi$ définissant une direction dans l'espace, comprenant une composante pour chaque voie du récepteur et dont chaque composante représente une réponse en amplitude et en phase de la voie respective du récepteur dans la direction $(\theta, \phi)$, le signal utile étant défini par une amplitude *u[k]* et par une direction actuelle $(\theta_u, \phi_u)$ inconnues, les signaux d'interférences étant définis par une amplitude $s_l[k]$ et par une direction actuelle $(\theta_{il}, \phi_{il})$ inconnues, l représentant le *l*-ième signal d'interférences, un vecteur complexe $\underline{a}(\theta_u, \phi_u)$, dit vecteur directionnel actuel du signal utile, comprenant une composante pour chaque voie du récepteur et dont chaque composante représente la réponse en amplitude et phase d'une voie respective du récepteur dans la direction d'arrivée actuelle du signal utile $(\theta_u, \phi_u)$, et des vecteurs complexes $\underline{a}(\theta_{il}, \phi_{il})$, dits vecteurs directionnels actuels des signaux d'interférences, comprenant chacun une composante pour chaque voie du récepteur et dont chaque composante représente la réponse en amplitude et phase d'une voie respective du récepteur dans la direction d'arrivée actuelle des signaux d'interférences $(\theta_{il}, \phi_{il})$ ;

(b) Estimation, à partir du signal multi-voies numérique, d'une matrice $\hat{R}_x$ de corrélation des signaux reçus sur les voies du récepteur ;

(c) Estimation de la variance du bruit, à partir des vecteurs propres et des valeurs propres de la matrice de corrélation $\hat{R}_x$ ;

(d) Estimation initiale de la direction d'arrivée du signal utile $(\hat{\theta}_u, \hat{\phi}_u)$ et des signaux d'interférences $(\hat{\theta}_{il}, \hat{\phi}_{il})$ à partir du calcul du spectre spatial MUSIC, puis calcul des vecteurs directionnels supposés dans les directions estimées du signal utile $\underline{\tilde{a}}(\hat{\theta}_u, \hat{\phi}_u)$ et des signaux d'interférences $\underline{\tilde{a}}(\hat{\theta}_{il}, \hat{\phi}_{il})$ ;

(e) Initialisations :

- Calcul d'une matrice diagonale dont les éléments sont les puissances du signal utile et des signaux d'interférences calculés à partir des vecteurs directionnels supposés dans l'étape (d) et de la matrice de corrélation $\hat{R}_x$ ; et

- Calcul d'une matrice diagonale complexe dont les éléments représentent l'écart entre les vecteurs directionnels actuels et les vecteurs directionnels supposés dans l'étape (d), la matrice étant dite matrice des erreurs amplitudes / phases ;

(f) Calcul par itérations :

- D'une matrice des vecteurs directionnels actuels dans les directions estimées du signal utile et des signaux d'interférences dont les éléments sont le produit des éléments de la matrice des erreurs amplitudes / phases et des vecteurs directionnels supposés dans les directions estimées ;

- Des puissances des signaux utiles et des signaux d'interférences à partir de la matrice des vecteurs directionnels actuels dans les directions estimées ;

- De la matrice des erreurs amplitudes / phases ; et

- des directions d'arrivée $(\hat{\theta}_u, \hat{\phi}_u)$ du signal utile et $(\hat{\theta}_{il}, \hat{\phi}_{il})$ des signaux d'interférences, le calcul des vecteurs directionnels actuels dans les directions estimées du signal utile et des signaux d'interférences s'effectuant, pour une première itération par rapport aux vecteurs directionnels supposés calculés dans l'étape (d) et aux erreurs amplitudes / phases initialisées à l'étape (e), puis pour chacune d'une pluralité d'itérations suivantes, par rapport aux vecteurs directionnels supposés et aux erreurs amplitudes / phases calculés durant l'itération précédente, un nombre d'itérations étant prédéfini par un utilisateur ;

(g) Reconstruction d'une matrice de corrélation R^<sub>ib</sub> des signaux d'interférences et du bruit ;

(g) Reconstruction d'une matrice de corrélation $R^\wedge_{ib}$ des signaux d'interférences et du bruit ;

(h) Calcul d'une matrice de pondération à partir de la matrice de corrélation $R^\wedge_{ib}$ calculée durant l'étape (g) ;

et

(i) Suppression des signaux d'interférences dans le signal reçu lors de l'étape (a).

2. Procédé de réception d'un signal et de réjection d'interférence selon la revendication 1, dans lequel le nombre d'itérations est compris entre 15 et 25.

3. Procédé de réception d'un signal et de réjection d'interférence selon l'une des revendications précédentes, dans lequel ledit nombre d'itérations est de 20.

4. Récepteur multi-voies configuré pour recevoir un signal (S) comprenant un signal utile et des signaux d'interférences sur une pluralité de voies, et rejeter les signaux d'interférences, comprenant :

   - Une antenne réseau comprenant au moins trois éléments rayonnants (501) ;
   - Au moins trois chaînes radio (C1, CN) pour la réception, transposition et discrétisation dudit signal reçu sur chacune des voies du récepteur, afin d'obtenir un signal multi-voies discrétisé, les chaînes radio comprenant chacune un des éléments rayonnants de l'antenne ; et
   - des circuits de calculs (500),

   **caractérisé en ce que** les circuits de calculs sont configurés pour la suppression desdits signaux d'interférences selon le procédé de l'une des revendications 1 à 3.

5. Récepteur multi-voies selon la revendication 4 dans lequel les circuits de calculs comprennent un processeur de signal numérique, DSP, ou un circuit intégré programmable ou un circuit intégré à application spécifique.

6. Récepteur multi-voies selon la revendication 5 dans lequel ledit récepteur multi-voies est adapté à appartenir à une partie réception d'une charge utile d'un satellite.

7. Récepteur multivoies selon l'une des revendications 4 et 5 dans lequel ledit récepteur multi-voies est adapté à appartenir à une station de base d'un système radio-mobile terrestre.

**Patentansprüche**

1. Verfahren zum Empfangen eines Signals, wobei das Signal ein Nutzsignal, Interferenzsignale und Rauschen umfasst, und zum Unterdrücken der Interferenzsignale in einem Mehrwegempfänger, das die folgenden Schritte umfasst:

   (a) Empfangen, Frequenzumsetzen und digitales Umwandeln des auf jedem der Wege des Mehrwegempfängers empfangenen Signals, um ein digitales Mehrwegsignal zu erhalten, wobei dieses Mehrwegsignal der Summe aus dem Nutzsignal, den Interferenzsignalen und dem Rauschen entspricht, wobei der Empfänger eine Netzantenne umfasst, die eine Vielzahl von strahlenden Elementen umfasst, von denen jedes einem der Wege des Mehrwegempfängers entspricht, und die Netzantenne durch eine komplexwertige Vektorfunktion $\underline{a}(\theta, \phi)$ der beiden Variablen $\theta$ und $\varphi$ definiert wird, die eine Richtung im Raum definieren, die eine Komponente für jeden Weg des Empfängers umfasst und von der jede Komponente eine Amplituden- und Phasenreaktion des jeweiligen Wegs des Empfängers in der Richtung $(\theta, \phi)$ repräsentiert, wobei das Nutzsignal durch eine unbekannte Amplitude $u[k]$ und eine unbekannte aktuelle Richtung $(\theta_u, \phi_u)$ definiert wird, wobei die Interferenzsignale definiert werden durch eine unbekannte Amplitude $s_{il}[k]$ und eine unbekannte aktuelle Richtung $(\theta_{il}, \phi_{il})$, wobei $l$ das $l$-te Interferenzsignal repräsentiert, einen komplexen Vektor $a(\theta_u, \phi_u)$, aktueller Richtungsvektor des Nutzsignals genannt, der eine Komponente für jeden Weg des Empfängers umfasst und von dem jede Komponente die Amplituden- und Phasenreaktion eines jeweiligen Wegs des Empfängers in der aktuellen Ankunftsrichtung des Nutzsignals $(\theta_u, \phi_u)$ repräsentiert, und komplexe Vektoren $\underline{a}(\theta_{il}, \phi_{il})$, aktuelle Richtungsvektoren der Interferenzsignale genannt, die jeweils eine Komponente für jeden Weg des Empfängers umfassen und von denen jede Komponente die Amplituden- und Phasenreaktion eines jeweiligen Wegs des Empfängers in der aktuellen Ankunftsrichtung der Interferenzsignale $(\theta_{il}, \phi_{il})$ repräsentiert;

   (b) Schätzen, auf der Basis des digitalen Mehrwegsignals, einer Korrelationsmatrix $\hat{R}_x$ der auf den Wegen des Empfängers empfangenen Signale;

(c) Schätzen der Varianz des Rauschens auf der Basis der Eigenvektoren und Eigenwerte der Korrelationsmatrix $\hat{R}_x$;

(d) anfängliches Schätzen der Ankunftsrichtung des Nutzsignals $(\hat{\theta}_u, \hat{\phi}_u)$ und der Interferenzsignale $(\hat{\theta}_{il}, \hat{\phi}_{il})$ auf der Basis der Berechnung des MUSIC-Raumspektrums, dann Berechnen der in den geschätzten Richtungen des Nutzsignals $\tilde{\underline{a}}(\hat{\theta}_u, \hat{\phi}_u)$ und der Interferenzsignale $\tilde{\underline{a}}(\hat{\theta}_{il}, \phi_{il})$ angenommenen Richtungsvektoren;

(e) Initialisierungen:

- Berechnen einer diagonalen Matrix, deren Elemente die Leistungen des Nutzsignals und der Interferenzsignale sind, berechnet auf der Basis der in Schritt (d) angenommenen Richtungsvektoren und der Korrelationsmatrix $\hat{R}_x$; und
- Berechnen einer komplexen diagonalen Matrix, deren Elemente die Abweichung zwischen den aktuellen Richtungsvektoren und den in Schritt (d) angenommenen Richtungsvektoren repräsentieren, wobei die Matrix Amplituden/Phasen-Fehlermatrix genannt wird;

(f) Berechnen durch Iterationen:

- einer Matrix der aktuellen Richtungsvektoren in den geschätzten Richtungen des Nutzsignals und der Interferenzsignale, deren Elemente das Produkt aus den Elementen der Amplituden/Phasen-Fehlermatrix und den angenommenen Richtungsvektoren in den geschätzten Richtungen sind;
- der Leistungen der Nutzsignale und der Interferenzsignale auf der Basis der Matrix der aktuellen Richtungsvektoren in den geschätzten Richtungen;
- der Amplituden/Phasen-Fehlermatrix; und
- der Ankunftsrichtungen $(\hat{\theta}_u, \hat{\phi}_u)$ des Nutzsignals und $(\hat{\theta}_{il}, \hat{\phi}_{il})$ der Interferenzsignale,

wobei das Berechnen der aktuellen Richtungsvektoren in den geschätzten Richtungen des Nutzsignals und der Interferenzsignale für eine erste Iteration in Bezug auf die in Schritt (d) berechneten angenommenen Richtungsvektoren und die in Schritt (e) initialisierten Amplituden-/Phasenfehler, dann für jede einer Vielzahl von Folgeiterationen in Bezug auf die angenommenen Richtungsvektoren und auf die in der vorhergehenden Iteration berechneten Amplituden-/Phasenfehler erfolgt, wobei die Anzahl der Iterationen von einem Benutzer vorgegeben wird,

(g) Rekonstruieren einer Korrelationsmatrix $R^{\wedge}_{ib}$ der Interferenzsignale und des Rauschens;

(h) Berechnen einer Gewichtungsmatrix auf der Basis der in Schritt (g) berechneten Korrelationsmatrix $R^{\wedge}_{ib}$;

und

(i) Unterdrücken der Interferenzsignale in dem in Schritt (a) empfangenen Signal.

2. Verfahren zum Empfangen eines Signals und zum Zurückweisen von Interferenz nach Anspruch 1, wobei die Anzahl der Iterationen zwischen 15 und 25 liegt.

3. Verfahren zum Empfangen eines Signals und zum Zurückweisen von Interferenz nach einem der vorhergehenden Ansprüche, wobei die Anzahl der Iterationen 20 beträgt.

4. Mehrwegempfänger, konfiguriert zum Empfangen eines Signals (S), das ein Nutzsignal und Interferenzsignale auf einer Vielzahl von Wegen umfasst, und zum Zurückweisen der Interferenzsignale, der Folgendes umfasst:

- eine Netzantenne umfassend mindestens drei strahlende Elemente (501);
- mindestens drei Funkkanäle (C1, CN) zum Empfangen, Umsetzen und Diskretisieren des auf jedem der Wege des Empfängers empfangenen Signals, um ein diskretisiertes Mehrwegsignal zu erhalten, wobei die Funkkanäle jeweils eines der strahlenden Elemente der Antenne umfassen; und
- Berechnungsschaltungen (500),

**dadurch gekennzeichnet, dass** die Berechnungsschaltungen zum Unterdrücken der Interferenzsignale mit dem Verfahren nach einem der Ansprüche 1 bis 3 konfiguriert sind.

5. Mehrwegempfänger nach Anspruch 4, bei dem die Berechnungsschaltungen einen Digitalsignalprozessor, DSP, oder eine programmierbare integrierte Schaltung oder eine anwendungsspezifische integrierte Schaltung umfassen.

6. Mehrwegempfänger nach Anspruch 5, wobei der Mehrwegempfänger so ausgelegt ist, dass er zu einem Empfangsteil einer Nutzlast eines Satelliten gehört.

7. Mehrwegempfänger nach einem der Ansprüche 4 und 5, wobei der Mehrwegempfänger so ausgelegt ist, dass er zu einer Basisstation eines terrestrischen Mobilfunksystems gehört.

**Claims**

1. A method for receiving a signal, the signal comprising a useful signal, interfering signals and noise, and for suppressing interfering signals in a multi-channel receiver, comprising the steps of:

   (a) reception, frequency transposition and digital conversion of the signal received over each of the channels of the multi-channel receiver, so as to obtain a digital multi-channel signal, this multi-channel signal corresponding to the sum of the useful signal, of the interfering signals and of the noise, the receiver comprising an array antenna that comprises a plurality of radiating elements, each of which corresponds to one of the channels of the multi-channel receiver, and the array antenna is defined by a complex-valued vector function $\underline{a}(\theta, \phi)$ of two variables $\theta$ and $\varphi$ defining a direction in space, comprising one component for each channel of the receiver and each component of which represents the amplitude and phase response of the respective channel of the receiver in the direction $(\theta, \phi)$, the useful signal being defined by an unknown amplitude $u[k]$ and by an unknown current direction $(\theta_u, \phi_u)$, the interfering signals being defined by an unknown amplitude $s_i[k]$ and by an unknown current direction $(\theta_{il}, \phi_{il})$, $l$ representing the $l$-th interfering signal, a complex vector $a(\theta_u, \phi_u)$, which is referred to as the current directional vector of the useful signal, comprising one component for each channel of the receiver, each component of which represents the amplitude and phase response of a respective channel of the receiver in the current arrival direction $(\theta_u, \phi_u)$ of the useful signal, and, complex vectors $a(\theta_{il}, \phi_{il})$, which are referred to as current directional vectors of the interfering signals, each comprising one component for each channel of the receiver and each component representing the amplitude and phase response of a respective channel of the receiver in the current arrival direction $(\hat{\theta}_{il}, \phi_{il})$ of the interfering signals;
   (b) estimation, from the digital multi-channel signal, of a correlation matrix $\hat{R}_x$ of the signals received over the channels of the receiver;
   (c) estimation of the variance of the noise, from the eigenvectors and eigenvalues of the correlation matrix $\hat{R}_x$;
   (d) initial estimation of the arrival directions of the useful signal $(\hat{\theta}_u, \hat{\phi}_u)$ and of the interfering signals $(\hat{\theta}_{il}, \hat{\phi}_{il})$ from computation of the MUSIC spatial spectrum, then computation of the assumed directional vectors in the estimated directions of the useful signal $\underline{\tilde{a}}((\hat{\theta}_u, \hat{\phi}_u)$ and of the interfering signals $\underline{\tilde{a}}(\hat{\theta}_{il}, \phi_{il})$;
   (e) initialisations:

   - computation of a diagonal matrix, the elements of which are the power levels of the useful signal and of the interfering signals computed from the directional vectors assumed in step (d) and from the correlation matrix $\hat{R}_x$; and
   - computation of a complex diagonal matrix, the elements of which represent the disparity between the current directional vectors and the directional vectors assumed in step (d), this matrix being called the amplitude/phase error matrix;

   (f) iterative computation:

   - of a matrix of the current directional vectors in the estimated directions of the useful signal and of the interfering signals, the elements of which are the product of the elements of the amplitude/phase error matrix and of the assumed directional vectors in the estimated directions;
   - of the powers of the useful signals and of the interfering signals, from the matrix of the current directional vectors in the estimated directions;
   - of the matrix of the amplitude/phase errors; and
   - of the arrival directions $(\hat{\theta}_u, \hat{\phi}_u)$ of the useful signal and $(\hat{\theta}_{il}, \hat{\phi}_{il})$ of the interfering signals,

   the current directional vectors in the estimated directions of the useful signal and of the interfering signals being computed, in a first iteration, with respect to the assumed directional vectors computed in step (d) and to the amplitude/phase errors initialised in step (e), then, for each of a plurality of following iterations, with respect to the directional vectors assumed and to the amplitude/phase errors computed in the preceding iteration, a number of iterations being predefined by a user;

(g) reconstruction of a correlation matrix $R^\wedge_{ib}$ of the interfering signals and of the noise;

(h) computation of a weighting matrix from the correlation matrix $R^\wedge_{ib}$ computed in step (g);

and

(i) suppression of the interfering signals from the signal received in step (a).

2. The method for receiving a signal and for rejecting interference according to claim 1, wherein the number of iterations is between 15 and 25.

3. The method for receiving a signal and for rejecting interference according to one of the preceding claims, wherein said number of iterations is 20.

4. A multi-channel receiver configured to receive a signal (S) comprising a useful signal and interfering signals over a plurality of channels, and to reject the interfering signals, comprising:

- an array antenna comprising at least three radiating elements (501);
- at least three radio channels (C1, CN) for receiving, transposing and discretising said signal received over each of the channels of the receiver, in order to obtain a discretised multi-channel signal, the radio channels each comprising one of the radiating elements of the antenna; and
- computing circuits (500),

**characterised in that** the computing circuits are configured to suppress said interfering signals according to the method of one of claims 1 to 3.

5. The multi-channel receiver according to claim 4, wherein the computing circuits comprise a digital signal processor, DSP, or a programmable integrated circuit, or an application-specific integrated circuit.

6. The multi-channel receiver according to claim 5, wherein said multi-channel receiver is adapted to belong to a receiving portion of a payload of a satellite.

7. The multi-channel receiver according to one of claims 4 and 5, wherein said multi-channel receiver is adapted to belong to a base station of a terrestrial mobile-radio system.

**Fig. 1**

**Fig. 2a**

**Fig. 2b**

**Étape (a)**
Données d'entrée

**Étape (b)**
Estimation $\hat{R}_x$

**Étape (c)**
Estimation variance bruit

**Étape (d)**
Estimation initiale $\hat{\theta}_u$, $\hat{\theta}_{i_l}$

**Étape (e)**
Initialisations puissances
et erreurs amplitudes / phases

**Étape (f)**

Calcul de

$\hat{\underline{a}}_u$, $\hat{\underline{a}}_{i_l}$

Puissances

Erreurs amplitude / phases

$\hat{\theta}_u$, $\hat{\theta}_{i_l}$

I itérations

**Étape (g)**
Reconstruction de $\hat{R}_{ib}$

**Étape (h)**
Calcul de $\underline{w}$

**Étape (i)**
Suppression interférences

**Fig. 3**

Réseau linéaire à 10 éléments - SNR = 10 dB - INR = 10 dB

**Fig. 4a**

Réseau linéaire à 10 éléments - SNR = 20 dB - INR = 10 dB

**Fig. 4b**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Optimum Array Processing. **H.L. VAN TREES.** Part IV of Detection, Estimation and Modulation Theory. Wiley Interscience, 2002
- **Y. WANG et al.** Robust mainlobe interference suppression for coherent interference environment. *EURASIP Journal on advances in signal processing,* 2016
- **J. LI ; P. STOICA.** Robust adaptive beamforming. Wiley, 2006
- **S.A. VOROBYOV.** Principles of minimum variance robust adaptive beamforming design. *Signal Processing,* 2013, vol. 93, 3264-3277
- **B.D. CARLSON.** Covariance matrix estimation errors and diagonal loading in adaptive arrays. *IEEE Transactions on Aerospace and Electronic Systems,* 1988, vol. 24, 397-401
- **M.H. ER.** Adaptive antenna array under directional and spatial derivative constraints. *IEEE Proceedings H-Microwaves Antennas and Propagation,* 1988, vol. I35, 414-419
- **A. HAIMOVICH et al.** Adaptive antenna arrays using eignevector methods. *IEEE International Symposium on Antennas and Propagation,* 1988, vol. 3, 980-983
- **J. LI et al.** On robust Capon beamforming and diagonal loading. *IEEE Transactions on Signal Processing,* 2003, vol. 51, 1702-1715
- **Y.GU et al.** Robust adaptive beamforming based on interference covariance matrix reconstruction and steering vector estimation. *IEEE Transactions on Signal Processing,* 2012, vol. 60, 3881-3885
- **A. KHABBAZIBASMEN et al.** Robust adaptive beamforming based on steering vector estimation with as little as possible prior information. *IEEE Transactions on Signal Processing,* 2012, 2974-2987
- **S. VOROBYOV et al.** On the relationship between robust minimum variance beamformers with probabilistic and worst-case distortionless response constraints. *IEEE Transactions on Signal Processing,* 2008, vol. 56, 5719-5724
- **R.O. SCHMIDT.** Multiple Emitter Location and Signal Parameter Estimation. *IEEE Transactions on Antennas and Propagation,* 1986, 276-280
- **A.J. WEISS ; B. FRIEDLANDER.** Almost blind » steering vector estimation using second-order moments. *IEEE Transactions on Signal Processing,* 2008, vol. 56, 5719-5724
- **A.J. WEISS ; B. FRIEDLANDER.** « Almost Blind » steering vector estimation using second-order moments. *IEEE Transactions on Signal Processing,* 1996, vol. 44, 1024-1027
- Optimum Array Processing. **H.L. VAN TREES.** Part IV of Detection, Estimation and Modulation Theory. Wiley Intersciences, 2002